## Europäisches Patentamt
## European Patent Office
## Office européen des brevets

(11) Veröffentlichungsnummer: **0 118 754**
**B1**

(12) **EUROPÄISCHE PATENTSCHRIFT**

(45) Veröffentlichungstag der Patentschrift:
10.08.88

(21) Anmeldenummer: **84101249.5**

(22) Anmeldetag: **07.02.84**

(51) Int. Cl.⁴: **H 04 N 11/04,** H 04 N 7/13

(54) Verfahren und Schaltungsanordnung zur digitalen Übertragung von Fernsehbildern.

(30) Priorität: **11.02.83 DE 3304787**

(43) Veröffentlichungstag der Anmeldung:
**19.09.84 Patentblatt 84/38**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**EP-A-0 077 069**
**DE-A-2 835 434**

**PROCEEDINGS OF IEEE, Band 68, Nr. 3, März 1980, New York, USA; A. NETRAVALI et al. "Picture coding : A review", Seiten 366-406**

(73) Patentinhaber: **Siemens Aktiengesellschaft Berlin und München, Wittelsbacherplatz 2, D-8000 München 2 (DE)**

(72) Erfinder: **Schlichte, Max, Dr.- Ing., Maxhofstrasse 30a, D-8000 München 71 (DE)**

**0 118 754**

**Beschreibung**

Die Erfindung betrifft ein Verfahren zur digitalen Übertragung von Fernsehbildern, bei dem jeweils die digitalisierten Signalwerte eines Teilbildes mit Hilfe einer Transformation in Spektralwerte umgewandelt werden, deren Koeffizienten ausgesendet werden und aus denen empfangsseitig wieder die Signalwerte des Teilbildes ermittelt werden. Außerdem sind Schaltungsanordnungen zur Transformation angegeben.

Für die Codierung von Bildsignalen stehen hauptsächlich zwei Prinzipien zur Auswahl, das in der Zeitdomäne arbeitende Prädiktionsverfahren und das in dem Spektralbereich operierende Transformationsverfahren.

Diese Verfahren sind in dem Aufsatz "Picture Coding A Review" Proceedings of the IEEE, Vol. 68, No. 3, March 1980, S. 366 - 406, beschrieben.

Beide Verfahren machen von der starken Korrelation benachbarter Bildpunkte Gebrauch, indem sie eine Codierung anstreben, bei der die zur Darstellung eines Bildelementes verwendete Information auf den tatsächlichen Informationsgehalt reduziert wird. Diese Redundanzreduktion wird durch eine Irrelevanzreduktion ergänzt.

Die Signale des Fernsehbildes werden bei der Transformation in verschiedene Spektralwerte umgesetzt, deren Koeffizienten übertragen und auf der Empfangsseite wieder in die entsprechenden Signalwerte (Luminanz und Chrominanz) umgesetzt werden. Fehler, die durch die Verfälschung der Spektralwerte entstehen, werden kaum wahrgenommen, da sich die Energie der Fehler auf das gesamte Teilbild erstreckt.

Da ein Teil der Spektralwerte nur einen vernachlässigbaren Anteil der Gesamtenergie enthält, kann dieser Teil der Spektralwerte bei vielen Verfahren zu Null gesetzt werden. Hierdurch wird eine Datenreduktion möglich. Der entstehende Fehler verteilt sich wieder auf die übrigen Spektralwerte und ist deshalb kaum wahrzunehmen.

Da es technologisch noch nicht möglich ist, ganze Fernsehbilder geschlossen zu transformieren, begnügt man sich mit der Transformation und Übertragung von Teilbildern. Eine dekorrelierende Wirkung der Transformation ist bei der üblichen blockweisen Transformation auch nur innerhalb der Teilbilder vorhanden.

In der europäischen Patentanmeldung EP-A-0 077 089 ist eine Anordnung zum Speichern oder Übertragen von transformationskodierten Bildsignalen und zum Rückgewinnen dieser Signale beschrieben. Die auf der Grundtransformation von jeweils zwei Werten aufbauende Rechenschritte werden so durchgeführt, daß das Ergebnis nur die ursprüngliche Wortlänge benötigt. Hierzu werden spezielle Quantisierungskennlinien verwendet.

Der DE-A-2 835 434 ist ein Verfahren zur Übertragung von Bildsignalen über schmalbandige Übertragungskanäle zu entnehmen. Die Abtastwerte des Bildsignals werden in Spektralkoeffizienten gewandelt und nacheinander zum Empfänger übertragen. Hier werden die Spektralkoeffizienten gespeichert, zudem wird laufend eine Rücktransformation durchgeführt und das rekonstruierte Bild während seiner Aufbauphase ständig dargestellt.

Aufgabe der vorliegenden Erfindung ist es, ein für die digitale Übertragung von Fernsehbildern geeignetes Transformationsverfahren mit verbesserter Bildqualität, bzw. größerer Datenreduktion anzugeben.

Diese Aufgabe wird dadurch gelöst, daß sendeseitig bei der Transformation des Teilbildes mit $n_2$ Signalwerten zusätzlich m überlappende Signalwerte mindestens eines vorhergehenden Teilbildes mitverwendet werden.

Grundgedanke der Erfindung ist es, durch teilweise Überlappung der Teilbilder eine blockübergreifende Korrelation mitzuerfassen. Die bereits transformierten und übertragenen Signalwerte werden bei der Transformation des nächsten Teilbildes nochmals miterfaßt. Diese überlappenden Signalwerte werden auf der Empfangsseite natürlich nicht doppelt ausgegeben. Die Transformation kann ein-, zwei- oder dreidimensional sein. Besonders effektiv ist, wenn möglich, eine zeitliche Überlappung (Verwendung von vorangegangenen Bildern) der Signalwerte. Durch die blockübergreifende Transformation wird eine bessere Bildqualität bei gleicher Datenrate erzielt.

Es ist vorteilhaft, daß von durch Transformation von $n = m + n_2$ Signalwerten gewonnenen n Spektralwerten nur jeweils $n_2$ Spektralwerte ausgesendet werden, daß empfangsseitig von den bereits durch Rücktransformation gewonnenen Signalwerten m überlappende Signalwerte mindestens des vorhergehenden Teilbildes gespeichert werden, und daß aus den bereits rücktransformierten überlappenden Signalwerten und aus den übertragenen Spektralwerten die $n_2$ Signalwerte des Teilbildes durch Rücktransformation gewonnen werden.

Eine Datenreduktion wird bei diesem Verfahren dadurch erreicht, daß von den durch Transformation erzeugten Spektralwerten jeweils nur soviel Spektralwerte, genauer, deren Koeffizienten, ausgesendet werden, wie neue Signalwerte bei dem Transformationsvorgang hinzugenommen werden. Der Rücktransformationsvorgang auf der Empfangsseite kann so verstanden werden, daß aus den letzten bereits rücktransformierten Signalwerten und aus den übertragenen Spektralwerten die fehlenden Spektralwerte errechnet werden. Aus den nun vollständig vorliegenden Spektralwerten werden wiederum die Signalwerte eines Teilbildes durch Rücktransformation ermittelt. Da die fehlenden Spektralwerte nicht explizit benötigt werden und auch eine Ermittlung der überlappenden Signalwerte nicht erforderlich ist, vereinfacht sich der Rücktransformationsvorgang.

Für eine weitere Datenreduktion ist es vorteilhaft, daß die auszusendenden Spektralwerte zusätzlich quantisiert werden.

Die quantisierten Spektralwerte wirken sich wiederum als Fehler für die Signalwerte aus. Diese Art der

2

Quantisierung ist bei geringeren Qualitätsansprüchen an das übertragene Bild oder auch bei bereits vorliegenden quantisierten Signalwerten möglich. Für die Quantisierung kann auch eine nichtlineare Kennlinie verwendet werden.

Damit keine zusätzlichen Fehler durch die Quantisierung entstehen, ist es zweckmäßig, daß sendeseitig aus bereits quantisierten Spektralwerten durch Rücktransformation Signalwerte gewonnen werden, von denen die überlappenden Signalwerte gespeichert werden und daß die gespeicherten überlappenden Signalwerte zusammen mit den folgenden Signalwerten in auszusendende Spektralwerte transformiert werden.

Ähnlich wie beim DPCM-Verfahren arbeiten Sende- und Empfangsteil in der gleichen Weise. Die Quantisierungsfehler akkumulieren sich hierbei nicht.

Es ist vorteilhaft, daß die diskrete Fourier-Transformation (DFT reell) verwendet wird.

Diese Transformation hat sich als nahezu optimal bei der Übertragung von Fernsehbildern erwiesen. Ihre Realisation ist einfach, da die einzelnen benötigten Werte aus einem Festwertspeicher ausgelesen werden können.

Weitere vorteilhafte Ausbildungen des Verfahrens und Schaltungsanordnungen zur Durchführung des Verfahrens sind in den übrigen Ansprüchen angegeben.

Das Verfahren wird anhand der Figuren 1 bis 11 näher erläutert.

Es zeigen

Fig. 1 ein Prinzipschaltbild der Sendeeinrichtung,
Fig. 2 ein Prinzipschaltbild der Empfangseinrichtung,
Fig. 3 die Aufteilung eines Fernsehbildes in Teilbilder
Fig. 4 die Aufteilung eines Fernsehbildes in zweidimensionale Teilbilder,
Fig. 5 die bei der überlappenden Transformation verwendeten Signalwerte,
Fig. 6 eine übliche Transformationsmatrix,
Fig. 7 eine erfindungsgemäße Transformationsmatrix,
Fig. 8 eine Empfangseinrichtung
Fig. 9 eine Recheneinheit zur Rücktransformation
Fig. 10 eine weitere Recheneinheit zur Rücktransformation,
Fig. 11 einen Sendeteil mit Quantisierung der Spektralwerte.

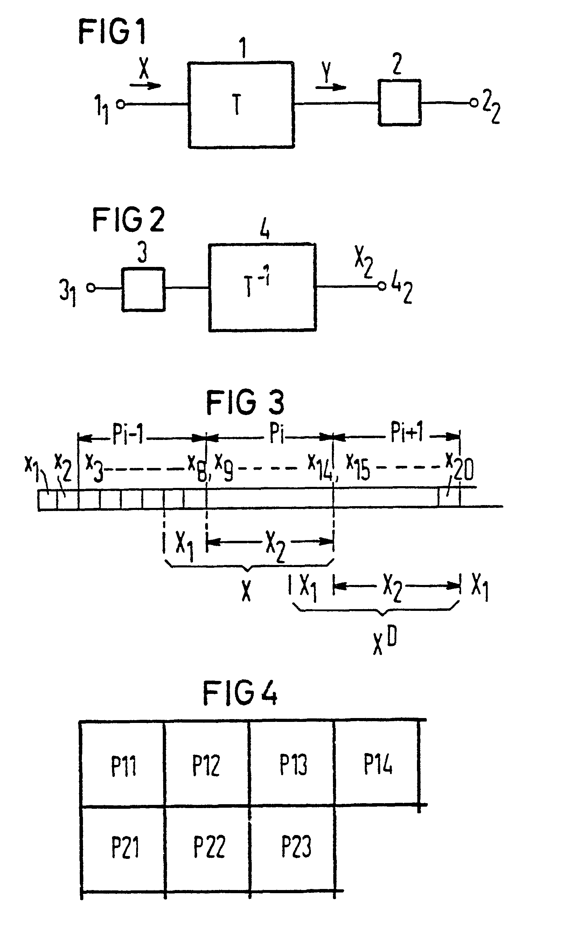

In Fig. 1 ist das Prinzipschaltbild der Sendeeinrichtung dargestellt. Sie enthält eine Transformationseinrichtung 1 und einen Codierer 2. Der Transformationseinrichtung 1 wird über ihren Eingang $1_1$ ein digitalisiertes Fernsehsignal zugeführt. In der Transformationseinrichtung werden die zu transformierenden Signalwerte X in Spektralwerte Y umgewandelt. Die Spektralwerte Y werden dem Codierer 2 zugeführt, der sie in eine für die Übertragung geeignete Form umsetzt und an seinem Ausgang $2_2$ abgibt.

Selbstverständlich sind verschiedene Varianten bei der Übertragung von Fernsehbildern möglich. So kann beispielsweise ein Farbfernsehsignal in mehrere Komponenten, im allgemeinen das Luminanzsignal und zwei Farbdifferenzsignale zerlegt werden. Jedes dieser Signale kann hierbei in jeweils einer Sendeeinrichtung entsprechend Fig. 1 transformiert werden. Die einzelnen transformierten Signale werden dann in einer Multiplex-Einrichtung zusammengefaßt. Ebenso ist natürlich auch der Einsatz einer Transformationseinrichtung 1 im Zeitmultiplexbetrieb denkbar. Ebenso kann ein Fernsehbild in drei Farbkomponenten zerlegt werden, und diese Komponenten werden nach der Transformation separat übertragen. Diese Varianten sind jedoch für die Anwendung des Verfahrens unwesentlich. Die noch genauer zu erläuternde Transformation kann mathematisch mit Hilfe der Vektor Schreibweise und der Matrizendarstellung einfach beschrieben werden. Für die sendeseitige Transformation gilt

$$Y = T \cdot X,$$

wobei X ein Vektor mit den Signalwerten $x_1$ bis $x_n$ ist, und der Vektor Y die Spektralwerte $y_1$ bis $y_n$ umfaßt. T stellt eine orthogonale Transformationsmatrix dar, deren Zeilenanzahl mit der Anzahl der Spektralwerte y übereinstimmt.

Die Empfangseinrichtung besteht aus einem Decodierer 3 und einer Rücktransformationeinrichtung 4. Die ausgesendeten Spektralwerte gelangen über den Eingang $3_1$ zum Decodierer 3, der sie wiederum in digitale Codewörter umsetzt. Die Spektralwerte werden in der Rücktransformationseinrichtung wieder in die ursprünglichen Signalwerte X rücktransformiert. In der Matrixschreibweise gilt

$$X = T^{-1} \cdot Y$$

wobei $T^{-1}$ die zu T inverse Matrix darstellt.

Am Ausgang $4_2$ der Rücktransformationseinrichtung werden nur die Signalwerte $X_2$ ausgegeben.

In Fig. 3 soll das Verfahren anhand einer eindimensionalen Transformation näher erläutert werden. Ein Fernsehbild, hier ist eine Zeile dargestellt, wird in mehrere Teilbilder Pi zerlegt. Das erste dargestellte Fernsehteilbild Pi-1 umfaßt die Signalwerte $x_3$ bis $x_8$. Das nächste Fernsehteilbild $P_i$ umfaßt die Signalwerte $x_9$ bis $x_{14}$. Die nicht überlappenden Signalwerte $x_9$ bis $x_{14}$ werden durch den Vektor $X_2$ beschrieben. Die überlappenden Signalwerte $x_7$ und $x_8$ werden mit dem Vektor $X_1$ bezeichnet. Beide Vektoren $X_1$ und $X_2$ stellen den Vektor X dar. Die durch den Vektor X beschriebenen Signalwerte werden der Transformationseinrichtung zugeführt und nach Umsetzung in Spektralwerte Y übertragen. Bein nächsten Transformationsvorgang werden in diesem Beispiel die letzten Signalwerte $x_{13}$ und $x_{14}$ der Transformationseinrichtung 1 wiederholt zugeführt.

3

Neu hinzukommen die Signalwerte $x_{15}$ bis $x_{20}$. Der Vektor $X^D$ bezeichnet die Signalwerte, die dem nächsten Transformationsvorgang zugrunde liegen. Die Anzahl der Signalwerte $X_1$ wird mit m, die Anzahl der mit $X_2$ bezeichneten Signalwerte mit $n_2$ bezeichnet. Der Vektor

$$X = \begin{vmatrix} X_1 \\ X_2 \end{vmatrix}$$

umfaßt damit $n = m + n_2$ Elemente.

Wie aus Fig. 3 hervorgeht, werden jeweils die m letzten Signalwerte eines Fernsehteilbildes als m überlappende Signalwerte $X_1$ bei der Codierung des nächsten Fernsehteilbildes Pi+1 mitverwendet. Zu Beginn der Bildübertragung muß natürlich ein komplettes Teilbild, z. B. die Bildpunkte $x_1$ bis $x_8$ durch eine nichtüberlappende Transformation übertragen werden.

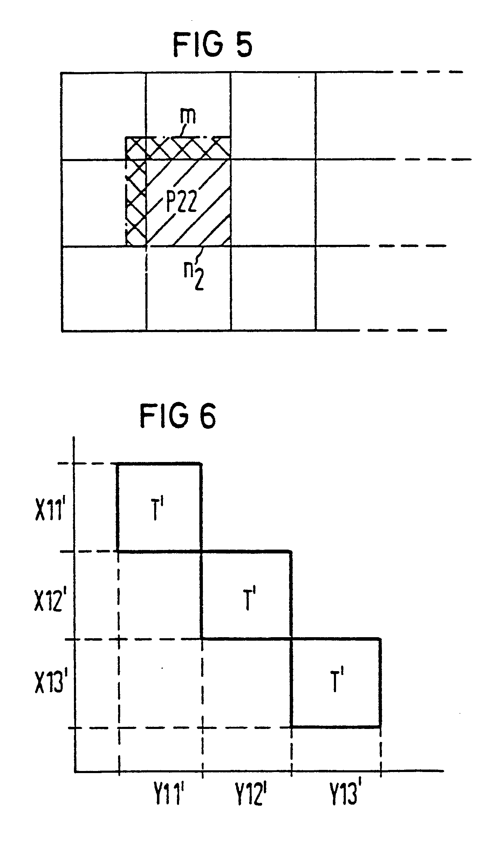

In Fig. 4 ist die Aufteilung eines Fernsehbildes in quadratische Fernsehteilbilder P11, P12,... dargestellt. Bei den bisher üblichen Transformationsverfahren wird jedes Teilbild P11, P12... für sich transformiert und übertragen. Bei dem erfindungsgemäßen Verfahren wird jedoch nicht nur ein Teilbildbeispielsweise das Teilbild P22 - mit $n_2$ Signalwerten transformiert (Fig. 5), sondern zusätzlich werden die m Signalwerte $X_1$ der links und oben angrenzenden Bildflächen von bereits übertragenen Teilbildern zur Transformation mitverwendet.

Bei einer dreidimensionalen Transformation werden zusätzlich noch Signalwerte eines oder mehrerer zeitlich vorausgegangener Teilbilder mitverwendet.

In Fig. 6 ist die Übertragung eines Fernsehbildes durch die Übertragung von Teilbildern schematisch dargestellt. Theoretisch ist es möglich, ein ganzes Fernsehbild aufeinmal zu transformieren. Dies bedeutet die Umsetzung aller Signalwerte eines ganzen Fernsehbildes in eine entsprechend große Anzahl von Spektralwerten. Da dies aufgrund der großen Anzahl der erforderlichen Rechenoperationen noch unmöglich ist, begnügt man sich mit der Übertragung von einzelnen Teilbildern, deren Signalwerte in Fig. 6 durch die Vektoren X11', X12' und X13' dargestellt sind. Die entsprechenden dazugehörigen Spektralwerte Y11', Y12' und Y13' erhält man jeweils durch Multiplikation mit der Transformationsmatrix T'.

Aus dem in Fig. 6 dargestellten Ausschnitt wird bereits ersichtlich, welch enorme Einsparung an Rechenvorgängen die Übertragung von Teilbildern mit sich bringt.

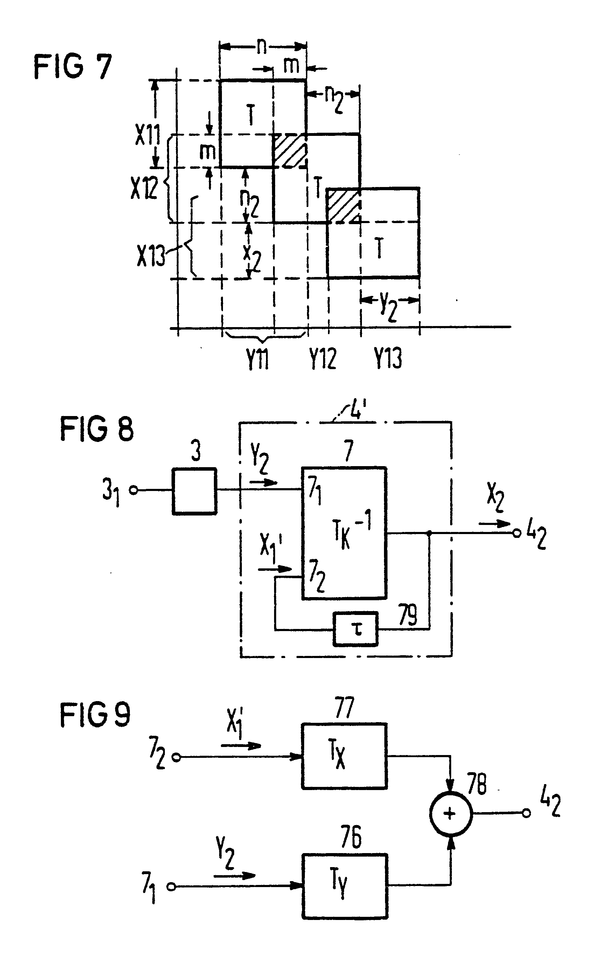

In Fig. 7 ist der Transformationsvorgang für das erfindungsgemäße Verfahren dargestellt. Die durch den Vektor X11 beschriebenen Signalwerte werden in die Spektralwerte Y11 transformiert. Die nächsten Signalwerte X12 werden in die Spektralwerte Y12 transformiert. Die Transformationsmatrizen T überlappen einander. Der Überlappungsbereich entspricht m Spalten und m Zeilen der Matrix entsprechend den m überlappenden Signalwerten. Aus Fig. 7 wird deutlich, daß zur Übertragung gleich großer Teilbilder entsprechend den Figuren 4 und 6 eine größere Transformationsmatrix erforderlich ist, oder daß bei gleich großer Transformationsmatrix nur kleinere Teilbilder und hiervon eine entsprechend erhöhte Anzahl für die Übertragung eines Fernsehbildes verwendet werden muß.

Bisher wurde zwar eine bessere Korrelation mit benachbarten Signalwerten erzielt, jedoch noch keine Reduzierung der Datenrate.

Der erste Schritt zur Reduzierung der Datenrate besteht darin, daß nicht alle transformierten Spektralwerte Y übertragen werden, sondern von diesen nur $n_2$ Spektralwerte $Y_2$. Hierbei werden zweckmäßigerweise um die Datenrate nochmals zu reduzieren die Spektralwerte $Y_2$, genauer, deren Koeffizienten, verwendet, deren Amplituden relativ gering sind. Wie noch zu zeigen ist, reichen $n_2$ Spektralwerte aus, um die neu übertragenen Signalwerte $X_2$ zu ermitteln.

In Fig. 8 ist eine entsprechende Empfangseinrichtung mit dem Decodierer 3 und einer entsprechend modifizierten Rücktransformationseinrichtung 4' dargestellt. Die Rücktransformationseinrichtung 4' enthält eine Recheneinheit 7, deren erstem Eingang $7_1$ die übertragenen Spektralwerte $Y_2$ vom Decodierer 3 zugeführt werden. Einem zweiten Eingang $7_2$ der Recheneinheit 7 werden von deren Ausgang $4_2$ die letzten durch Rücktransformation gewonnenen m Signalwerte $X'_1$ über einen Laufzeitspeicher 79 wieder zugeführt. Am Ausgang der modifizierten Rücktransformationseinrichtung 4' werden die neu übertragenen Signalwerte $X_2$ abgegeben. Für die blockweise Rücktransformation gilt die Gleichung

$$X = T^{-1} \cdot Y.$$

Da nur das neue Teilbild mit den Signalwerten $X_2$ berechnet werden muß, gilt

$$X_2 = T_K^{-1} \cdot \begin{bmatrix} X'_1 \\ Y_2 \end{bmatrix}$$

Die modifizierte Rücktransformationseinrichtung 4' muß die Gleichung

$$X_2 = T_x \cdot X_1 + T_y \cdot Y_2$$

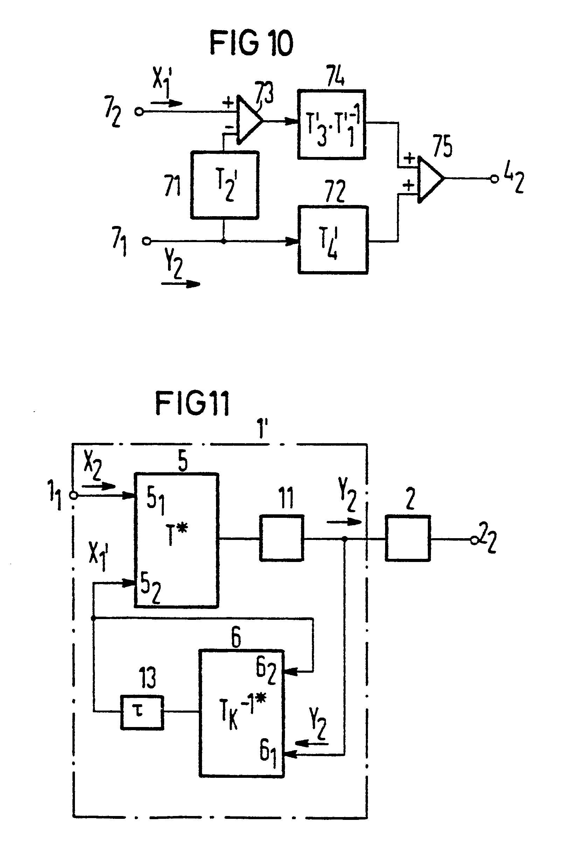

lösen. Ein entsprechender Schaltkreis ist in Fig. 9 dargestellt. Der Schaltkreis enthält zwei Recheneinheiten 76 und 77 zur Matrizenmultiplikation, deren Ausgänge mit einem Addierer 78 verbunden sind. Der Ausgang dieses Addierers stellt den Ausgang $4_2$ der Rücktransformationseinrichtung dar. Die inverse Transformationsmatrix $T^{-1}$ kann durch vier Teilmatrizen $T_1$ bis $T_4$ dargestellt werden:

$$T^{-1} = \begin{bmatrix} \begin{array}{ccc} a_{11} & \cdots & a_{1m} \\ & T_1 & \\ & \vdots & \\ a_{m1} & \cdots & a_{mm} \end{array} & \begin{array}{ccc} a_{1(m+1)} & \cdots & a_{1n} \\ & T_2 & \\ & \vdots & \\ a_{m(m+1)} & \cdots & a_{mn} \end{array} \\ \hline \begin{array}{ccc} a_{(m+1)} & \cdots & a_{(m+1)m} \\ & T_3 & \\ & \vdots & \\ a_{n1} & & a_{nm} \end{array} & \begin{array}{ccc} a_{(m+1)(m+1)} & \cdots & a_{(m+1)n} \\ & T_4 & \\ & \vdots & \\ a_{n(m+1)} & \cdots & a_{nn} \end{array} \end{bmatrix}$$

Entsprechend der Gleichung $X = T^{-1}Y$ gilt:

$$X_2 = T_3 \cdot Y_1 + T_4 \cdot Y_2 \text{ und } X_1 = T_1 \cdot Y_1 + T_2 Y_2.$$

Unter Eliminierung der nicht übertragenen Spektralwerte $Y_1$ ergibt sich für die Signalwerte $X_2$ des neu übertragenen Fernsehteilbildes:

$$X_2 = T_3 \cdot T_1^{-1} \cdot X_1 + (T_4 - T_3 \cdot T_1^{-1} \cdot T_2) \cdot Y_2$$

In der Fig. 8 wurde die Bezeichnung $X'_1$ verwendet, um anzudeuten, daß der Vektor $X_1$ durch Rücktransformation aus den übertragenen Spektralwerten $Y_2$ gewonnen wurde.

In Fig. 10 ist eine weitere Schaltungsanordnung zur Rücktransformationseinrichtung dargestellt. Der Eingang $7_1$ ist mit zwei Rechenschaltungen 71 und 72 verbunden. Der Eingang $7_2$, den der Vektor $X'_1$ zugeführt wird, ist mit dem ersten Eingang eines Subtrahierers 73 verbunden, dessen Subtrahiereingang mit dem Ausgang der Rechenschaltung 71 verbunden ist. Der Ausgang des Subtrahierers 73 ist mit einer weiteren Rechenschaltung 74 verbunden, deren Ausgang mit einem ersten Eingang eines Addierers 75 verbunden ist, dessen zweiter Eingang an den Ausgang der Rechenschaltung 72 angeschlossen ist. Der Ausgang dieses Addierers stellt wieder den Ausgang der modifizierten Rücktransformationseinrichtung 4' dar. Bei dem Aufbau dieser Rechenschaltung geht man von einer zur Rücktransformationsmatrix $T^{-1}$ transponierten Matrix $(T^{-1})^T$ aus, da sofort die Verarbeitung der übertragenen Spektralwerte $Y_2$ bzw. der gespeicherten Signalwerte $X_1$, erfolgen muß. Der Schaltkreis stellt eine Realisationsmöglichkeit der zuletzt angegebenen Lösung für $X_2$ bei Änderung der Reihenfolge bei der Multiplikation dar. Eine weitere Datenreduktion kann durch Quantisierung der Spektralwerte erreicht werden. In Fig. 11 ist eine entsprechend modifizierte Transformationseinrichtung 1' dargestellt. Diese enthält eine Transformationsschaltung 5 mit zwei Eingängen $5_1$ und $5_2$. Der Eingang $5_1$ ist mit dem Eingang $1_1$ der Transformationseinrichtung verbunden. Der Ausgang der Transformationsschaltung ist mit einem Quantisierer 11 verbunden, dessen Ausgang mit dem Eingang der Codiereinrichtung 2 verbunden ist. Außerdem ist der Ausgang des Quantisierers 11 mit dem ersten Eingang $6_1$ einer Rücktransformationsschaltung 6 ($T_K^{-1'}$) verbunden. Der Ausgang der Rücktransformationsschaltung 6 ist über ein Laufzeitglied 13 auf einen zweiten Eingang $6_2$ der Rücktransformationsschaltung geführt und außerdem mit einem zweiten Eingang $5_2$ der Transformationsschaltung 5 verbunden.

Die Rücktransformationsschaltung 6 entspricht der Rücktransformationsschaltung aus Fig. 8. Es werden hier jedoch nicht alle berechneten Signalwerte $X_2$ benötigt. Nur die m letzten Signalwerte werden weiterverwendet. Diese stellen die überlappenden m Signalwerte $X'_1$ dar. Die Transformationsschaltung 5 entspricht der Transformationsschaltung 1 aus Fig. 1. Es ist natürlich ausreichend, nur die Spektralwerte $Y_2$ zu berechnen. Der vorstehend beschriebene Sendeteil (Fig. 11) ist dem Empfangsteil nach Fig. 8 entsprechend aufgebaut und arbeitet mit ihm zusammen.

Für die Multiplikation von Vektoren mit Matrizen sind zahlreiche Rechenschaltungen bekannt. Beispielsweise wird jeweils ein Glied einer Zeile der Matrix aus einem Festwertspeicher abgerufen, mit einem dazugehörigem Wert eines Spaltenvektors multipliziert und in einem Akkumulator addiert. Nach Bearbeitung einer Zeile wird das Ergebnis der Akkumulation als ein Glied des zu berechnenden Spaltenvektors abgespeichert und der Multiplikationsvorgang wiederholt sich mit der nächsten Zeile der Matrix.

Als Transformation eignet sich beispielsweise die diskrete Cosinustransformation (DCT). Diese gehört zu den sogenannten "Shifted Discrete Fourier Transforms" (SDFT).

Die Elemente der Transformationsmatirx der SDFT ergeben sich aus

$$a_{r.s}^{u.v} = N^{-\frac{1}{2}} \exp\left\{ j2\pi \; \frac{(r+v)(s+u)}{N} \right\}$$

$r = 0, 1, 2,... (N-1)$
$s = 0, 1, 2,... (N-1)$

Für den wichtigen Spezialfall $u = 1/2$, $v = 0$ erhält man die diskrete Cosinustransformation (DCT) mit der reellen Kernmatrix

$$T_{DCT} = \sqrt{2/N} \begin{bmatrix} \sqrt{1/2} & \sqrt{1/2} & \sqrt{1/2} \\ \cos\frac{\pi}{2N} & \cos\frac{\pi}{2N}3 & \cdots \cos\frac{\pi}{2N}(N-1) \\ \cos\frac{\pi}{2N}2 & \cos\frac{\pi}{2N}6 & \cdots \cos\frac{\pi}{2N}(4N-2) \\ \cdots\cdots\cdots\cdots\cdots\cdots\cdots\cdots\cdots \\ \cdots\cdots\cdots\cdots\cdots\cdots\cdots\cdots\cdots \\ \cos\frac{\pi}{2N}(N-1) & \cos\frac{\pi}{2N}3(N-1) & \cdots\cos\frac{\pi}{2N}(2N^2-3N+1) \end{bmatrix}$$

Die diskrete Cosinustransformation ist bei vertretbarem Aufwand nahezu optimal für die Übertragung von Bildsignalen. Ebenso ist die diskrete Fourier Transformation anwendbar, die den Vorteil hat, die überlappenden Signalwerte stärker als die diskrete Cosinusfunktion zu berücksichtigen.

Die Transformation kann natürlich bei einem zu großen Signalvektor X oder bei einem mehrdimensionalen Signalvektor X mehrstufig erfolgen. Für die zweidimensionale Transformation gilt

$Y = T \cdot X \cdot T^T$.

Die mehrstufige Transformation ergibt praktisch die gleiche Effizienz wie die einstufige.

## Patentansprüche

1. Verfahren zur digitalen Übertragung von Fernsehbildern, bei dem jeweils die digitalisierten Signalwerte eines Teilbildes (Pi) mit Hilfe einer Transformation in Spektralwerte umgewandelt werden, deren Koeffizienten ausgesendet werden und aus denen empfangsseitig wieder die Signalwerte des Teilbildes (Pi) ermittelt werden,

dadurch gekennzeichnet,

daß sendeseitig bei der Transformation des Teilbildes (Pi) mit $n_2$ Signalwerten $(X_2)$ zusätzlich m überlappende Signalwerte $(X_1)$ mindestens eines vorhergehenden Teilbildes (Pi-1) mitverwendet werden.

2. Verfahren nach Anspruch 1,

dadurch gekennzeichnet,

daß von durch Transformation von $n = m + n_2$ Signalwerten (X) gewonnenen n Spektralwerten (Y) nur jeweils $n_2$ Spektralwerte $(Y_2)$ ausgesendet werden,

daß empfangsseitig von den bereits durch Rücktransformation gewonnenen Signalwerten $(X_2)$ m überlappende Signalwerte $(X_1')$ mindestens des vorhergehenden Teilbildes (Pi-1) gespeichert werden, und daß aus den bereits rücktransformierten überlappenden Signalwerten $(X_1')$ und aus den übertragenen Spektralwerten $(Y_2)$ die $n_2$ Signalwerte $(X_2)$ des Teilbildes (Pi) durch Rücktransformation gewonnen werden.

3. Verfahren nach einem der vorhergehenden Ansprüche,

dadurch gekennzeichnet,

daß die auszusendenden Spektralwerte $(Y_2)$ zusätzlich quantisiert werden.

4. Verfahren nach Anspruch 3,

dadurch gekennzeichnet,

daß sendeseitig aus bereits quantisierten Spektralwerten $(Y_2)$ durch Rücktransformation Signalwerte $(X_2)$ gewonnen werden, von denen die überlappenden Signalwerte $(X_1')$ gespeichert werden, und daß die

**0 118 754**

gespeicherten überlappenden Signalwerte $(X_1')$ zusammen mit den folgenden Signalwerten $(X_2)$ in auszusendende Spektralwerte $(Y_2)$ transformiert werden.

5. Verfahren nach einem der vorhergehenden Ansprüche
dadurch gekennzeichnet,
daß die diskrete Cosinus-Transformation (DCT) verwendet wird.

6. Verfahren nach einem der vorhergehenden Ansprüche,
dadurch gekennzeichnet,
daß die diskrete Fourier-Transformation (DFT reell) verwendet wird.

7. Verfahren nach einem der vorhergehenden Ansprüche,
dadurch gekennzeichnet,
daß mehrdimensionale Transformationen verwendet werden.

8. Verfahren nach einem der vorhergehenden Ansprüche,
dadurch gekennzeichnet,
daß empfangsseitig durch Rücktransformation nur die noch nicht vorliegenden Signalwerte $(X_2)$ ermittelt werden.

9. Transformationseinrichtung (1') zur Durchführung des Verfahrens nach Anspruch 4,
dadurch gekennzeichnet,
daß eine Transformationsschaltung (5) mit zwei Eingängen $(5_1, 5_2)$ vorgesehen ist, deren erstem Eingang $(5_1)$ jeweils $n_2$ Signalwerte (X2) eines Teilbildes (Pi) zugeführt werden, daß der Ausgang der Transformationsschaltung (5), an dem je Teilbild $n_2$ zu übertragende Spektralwerte $(Y_2)$ abgegeben werden, über einen Quantisierer (11) an den ersten Eingang $(6_1)$ einer Rücktransformationsschaltung (6) geführt ist, deren Ausgang über ein Laufzeitglied (13) mit dem zweiten Eingang $(6_2)$ der Rücktransformationsschaltung (6) und mit dem zweiten Eingang $(5_2)$ der Transformationsschaltung (5) verbunden ist, denen durch Rücktransformation ermittelte überlappende Signalwerte $(X_1')$ zugeführt werden, und daß die Transformationsschaltung (5) je Teilbild (Pi) insgesamt m rücktransformierte überlappende Signalwerte $(X_1')$ und $n_2$ anschließende zu übertragende Signalwerte $(X_2)$ in Spektralwerte umsetzt, von denen $n_2$ Spektralwerte $(Y_2)$ ausgesendet werden.

10. Rücktransformationseinrichtung (4') zur Durchführung des Verfahrens nach Anspruch 2,
dadurch gekennzeichnet,
daß eine Recheneinheit (7) mit zwei Eingängen $(7_1, 7_2)$ vorgesehen ist, deren erstem Eingang $(7_1)$ je Teilbild (Pi) $n_2$ übertragene Spektralwerte $(Y_2)$ zugeführt werden,
daß der Ausgang $(4_2)$ der Recheneinheit (7) über einen Laufzeitspeicher (79) mit ihrem zweiten Eingang $(7_2)$ verbunden ist, dem durch Rücktransformation bereits ermittelte m überlappende Signalwerte $(X_1')$ mindestens eines vorangegangenen Teilbildes (Pi-1) zugeführt werden,
und daß die Recheneinheit (7) aus jeweils $n_2$ Spektralwerten $(Y_2)$ und m überlappenden Signalwerten $(X_1')$ $n_2$ Signalwerte $(X_2)$ des Teilbildes (Pi) ermittelt.

## Claims

1. A method for the digital transmission of television pictures, wherein the digitalised signal values of each sub-frame (Pi) are converted by means of transformation into spectral values whose coefficients are transmitted and from which the signal values of the sub-frame (Pi) are redetermined at the receiving end, characterised in that at the transmitting end, for the transformation of the sub-frame (Pi) comprising $n_2$ signal values $(X_2)$, m overlapping signal values $(X_1)$ of at least one preceding sub-frame (Pi-1) are additionally used.

2. A method as claimed in claim 1, characterised in that of n spectral values (Y), obtained by the transformation of $n = m + n_2$ signal values (X), only $n_2$ spectral values $(Y_2)$ are transmitted, that at the receiving end, of the signal values $(X_2)$, already obtained by retransformation, m overlapping signal values $(X_1')$ at least of the preceding sub-frame (Pi-1) are stored, and that from the already retransmitted, overlapping signal values $(X_1')$ and from the transmitted spectral values $(Y_2)$ the $n_2$ signal values $(X_2)$ of the sub-frame (Pi) are obtained by retransformation.

3. A method as claimed in one of the preceding claims, characterised in that the spectral values $(Y_2)$ which are to be transmitted are additionally quantised.

4. A method as claimed in claim 3, characterised in that at the transmitting end already quantised spectral values $(Y_2)$ are.
retransformed to form signal values $(X_2)$ of which the overlapping
signal values $(X_1')$ are stored, and that the stored overlapping
signal values $(X_1')$ are transformed, together with the following
signal values $(X_2)$, into spectral values $(Y_2)$ which are to be transmitted.

5. A method as claimed in one of the preceding claims, characterised in that discrete Cosine transformation (DCT) is used.

6. A method as claimed in one of the preceding claims, characterised in that discrete Fourier transformation (DFT real) is used.

7. A method as claimed in one of the preceding claims, characterised in that multi-dimensional

7

transformation processes are used.

8. A method as claimed in one of the preceding claims, <u>characterised in that</u> at the receiving end only those signal values ($X_2$) which are not yet available are determined by retransformation.

9. A transformation device (1') for the execution of the method claimed in claim 4, <u>characterised in that</u> a transformation circuit (5) is provided which has two inputs ($5_1$, $5_2$), the first input ($5_1$) of which is in each case supplied with $n_2$ signal values ($X_2$) of a sub-frame (Pi),

that that output of the transformation circuit (5) from which are emitted $n_2$ spectral values ($Y_2$) to be transmitted in respect of each sub-frame, leads via a quantiser (11) to the first input ($6_1$) of a retransformation circuit (6) whose output is connected via a delay element (13) to the second input ($6_2$) of the retransformation circuit (6) and to the second input ($5_2$) of the transformation circuit (5), which are supplied with signal values ($X_1'$) determined by retransformation, and that in respect of each sub-frame (Pi) the transformation circuit (5) converts a total of m retransformed overlapping signal values ($X_1'$) and $n_2$ signal values ($X_2$) for subsequent transmission into spectral values, of which $n_2$ spectral values ($Y_2$) are transmitted.

10. A retransformation device (4') for the execution of the method claimed in claim 2, <u>characterised in that</u> a calculating unit (7) is provided which has two inputs ($7_1$, $7_2$), where the first input ($7_1$) is supplied with $n_2$ transmitted spectral values ($Y_2$) in respect of each sub-frame (Pi),

that the output ($4_2$) of the calculating unit (7) is connected via a delay line store (79) to its second input ($7_2$) which is supplied with overlapping signal values ($X_1'$), already determined by retransformation, of at least one preceding sub-frame (Pi-1), and that from in each case $n_2$ spectral values ($Y_2$) and m overlapping signal values ($X_1'$), the calculating unit (7) determines $n_2$ signal values ($X_2$) of the sub-frame (Pi).

## Revendications

1. Procédé pour la transmission numérique d'images de télévision selon lequel les valeurs des signaux numérisées d'une image partielle (Pi) sont, respectivement, convertis au moyen d'une transformation, en valeurs spectrales, dont les coefficients sont émis et à partir desquels, les valeurs des signaux de l'image partielle (Pi) sont, côté réception, de nouveau déterminés, caractérisé en ce que, côté émission, on utilise, lors de la transformation de l'image partielle (Pi), avec $n_2$ valeurs de signaux ($X_2$) concomitamment m valeurs supplémentaires de signaux ($X_1$) de chevauchement d'au moins une image partielle précédente (Pi-1).

2. Procédé selon la revendication 1, caractérisé en ce que l'on émet à chaque fois que $n_2$ valeurs spectrales ($Y_2$), prises parmi n valeurs spectrales (Y) obtenues par transformation de n = m + $n_2$ valeurs de signaux (X), que côté réception, on mémorise m valeurs de signaux de chevauchement ($X_1'$) d'au moins l'image partielle précédente (Pi-1), prises parmi les valeurs de signaux ($X_2$) déjà obtenues par transformation inverse, et que l'on obtient les $n_2$ valeurs de signaux ($X_2$) de l'image partielle (Pi) par transformation inverse, à partir des valeurs de signaux de chevauchement ($X_1'$) déjà inversement transformées, et des valeurs spectrales ($Y_2$) transmises.

3. Procédé selon l'une des revendications précédentes, caractérisé en ce que les valeurs spectrales ($Y_2$) à émettre sont en plus quantifiées.

4. Procédé selon la revendication 3, caractérisé en ce que côté réception, on obtient à partir de valeurs spectrales déjà quantifiées ($Y_2$), par transformation inverse, des valeurs de signaux ($X_2$) parmi lesquelles on mémorise les valeurs de signaux de chevauchement ($X_1'$), et que les valeurs de signaux de chevauchement ($X_1'$) mémorisées sont transformées, avec les valeurs de signaux ($X_2$) suivantes, en valeurs spectrales ($Y_2$) à transmettre.

5. Procédé selon l'une des revendications précédentes, caractérisé en ce que l'on utilise la transformation Cosinus discrète (TCD).

6. Procédé selon l'une des revendications précédentes, caractérisé en ce que l'on utilise la transformation de Fourier discrète (TFD réelle).

7. Procédé selon l'une des revendications précédentes, caractérisé en ce que l'on utilise des transformations pluridimensionnelles.

6. Procédé selon l'une des revendications précédentes, caractérisé en ce que côté réception on ne détermine par transformation inverse, que les valeurs de signaux ($X_2$) qui ne sont pas encore présentes.

9. Dispositif de transformation (1') pour la mise en oeuvre du procédé selon la revendication 4, caractérisé en ce qu'il est prévu un circuit de transformation (5) à deux entrées ($5_1$, $5_2$), à la première entrée ($5_1$) desquelles on applique à chaque fois $n_2$ valeurs de signaux ($X_2$) d'une image partielle (Pi), que la sortie du circuit de transformation (5), sur laquelle sont délivrées, à chaque image partielle, $n_2$ valeurs spectrales ($Y_2$) à transmettre, est reliée, par l'intermédiaire d'un quantificateur (11), à la première entrée ($6_1$) d'un circuit de transformation inverse (6) dont la sortie est reliée, par l'intermédiaire d'un dispositif à retard (13), à la seconde entrée ($6_2$) du circuit de transformation inverse (6) et à la seconde entrée ($5_2$) du circuit de transformation (5), auxquelles on applique des valeurs de signaux de chevauchement ($X_1'$) déterminées par la transformation inverse, et que le circuit de transformation (5) convertit par image partielle (Pi), au total, m valeurs de signaux de chevauchement ($X_1'$) transformées inversement et $n_2$ valeurs de signaux ($X_2$) à transmettre, en valeurs spectrales dont $n_2$ valeurs spectrales ($Y_2$) sont émises.

10. Dispositif de transformation inverse (4') pour la mise en oeuvre du procédé selon la revendication 2, caractérisé en ce qu'il est prévu une unité de calcul (7) à deux entrées ($7_1$, $7_2$), à la première entrée ($7_1$) de

laquelle, on applique par image partielle (Pi), $n_2$ valeurs spectrales ($Y_2$) transmises, que la sortie ($4_2$) de l'unité de calcul (7) est reliée, par l'intermédiaire d'une mémoire à dispositif à retard (79), à la seconde entrée ($7_2$) de l'unité de calcul, à laquelle on applique m valeurs de signaux de chevauchement ($X_1'$) d'au moins une image partielle précédente (Pi-1), et déjà déterminées par transformation inverse, et que l'unité de calcul (7) détermine à chaque fois $n_2$ valeurs de signaux ($X_2$) de l'image partielle (Pi), parmi $n_2$ valeurs spectrales ($Y_2$) et m valeurs de signaux de chevauchement ($X_1'$).

## FIG 1

$1_1$ ○ —→ X → | T (1) | —→ Y → | 2 | — ○ $2_2$

## FIG 2

$3_1$ ○ — | 3 | — | $T^{-1}$ (4) | — $X_2$ ○ $4_2$

## FIG 3

## FIG 4

| P11 | P12 | P13 | P14 |
|-----|-----|-----|-----|
| P21 | P22 | P23 | |

## FIG 5

m

P22

n₂

## FIG 6

X11'    T'

X12'        T'

X13'            T'

Y11'    Y12'    Y13'

FIG 7

FIG 8

FIG 9

# FIG 10

# FIG 11